# FASCICULE DE BREVET EUROPEEN

(11) **EP 1 424 242 B1**
(45) Date de publication et mention de la délivrance du brevet: **19.07.2006**
(21) Numéro de dépôt: 03364035.0
(22) Date de dépôt: 26.11.2003
(51) Int. Cl.: B60R 5/04

(54) **Tablette arrièrre de véhicule automobile, procédé de montage et véhicule correspondant**
Abdeckplatte für ein Kraftfahrzeug, Montageverfahren und entsprechendes Fahrzeug
Vehicle rear parcel shelf, process of assembly and corresponding vehicle

(30) Priorité: 27.11.2002 FR 0214918
(43) Date de publication de la demande: 02.06.2004
(73) Titulaire: WAGON SAS, 79300 Bressuire (FR)
(72) Inventeur: Maltaverne, Guy, 79300 Bressuire (FR)
(74) Mandataire: Vidon, Patrice

(56) Documents cités:
- EP-A- 1 241 052
- FR-A- 1 539 656
- GB-A- 2 348 176
- US-A- 3 446 526

## Description

Le domaine de l'invention est celui des équipements de véhicules automobiles. Plus précisément, l'invention concerne les tablettes arrière de véhicules automobiles, et notamment les tablettes dans lesquelles une fente est ménagée pour permettre le passage de la toile d'un store d'occultation.

Une tablette comportant les caractéristiques du préambule de la revendication 1 est connue du document GB-A-2 348 176.

L'invention s'applique en particulier, mais non exclusivement, aux tablettes montées fixes dans les véhicules, notamment équipés d'un coffre.

Le montage des éléments de garniture (notamment les habillages latéraux de part et d'autre de la tablette arrière) et des différents équipements est une opération relativement complexe dans un véhicule, du fait du nombre important d'éléments indépendants et des différents jeux d'ajustement que l'on peut rencontrer. C'est notamment le cas pour les tablettes prévues pour être équipées d'un store d'occultation.

Actuellement, la gamme de fabrication et de montage correspondante est relativement longue et peu aisée.

En effet, il est nécessaire, pour la fabrication de procéder à une succession d'étapes, et notamment :
- la fabrication d'une tablette arrière ;
- la réalisation d'une fente dans la tablette arrière (des moyens de rigidification de la fente devant généralement être prévus pour éviter que celle-ci ne se détériore dans le temps) ;
- la fabrication et l'assemblage d'un store d'occultation destiné à être fixé sous la tablette ;
- la fabrication de moyens de guidage de la toile du store destinés à être fixés à l'intérieur du véhicule.

Ces différentes pièces sont ensuite livrées au constructeur de véhicules automobiles, ce qui implique, tant pour le fabricant des pièces que pour le constructeur de véhicules, un suivi logistique approprié pour que ces pièces arrivent ensemble sur la chaîne de montage.

Chaque pièce est ensuite montée sur le véhicule avec autant de gammes de montage qu'il y a de pièces (tablette, store, rails de guidage...), et donc autant de risque de défaut de montage, de temps de montage...

En outre, une fois le store et ses rails de guidage montés, il est généralement nécessaire de procéder à des réglages complémentaires, ce qui s'avère être une perte de temps pour le constructeur de véhicules automobiles.

Du fait des différents jeux, des problèmes peuvent également se poser pour le montage et l'ajustement de la tablette par rapport à la garniture du véhicule.

L'invention a notamment pour objectif de pallier ces inconvénients de l'art antérieur.

Plus précisément, l'invention a pour objectif de proposer une tablette arrière de véhicule automobile qui puisse être montée rapidement et facilement dans le véhicule, en réduisant fortement les problèmes de jeux d'ajustement.

L'invention a également pour objectif de fournir une telle tablette permettant d'obtenir des simplifications notables en termes de logistique de fabrication et de montage.

En ce sens, l'invention a notamment pour objectifs de fournir une telle tablette qui :
- facilite la livraison des différentes pièces mentionnées précédemment et qui permette d'envisager une réduction des coûts de livraison ;
- optimise le stockage et le transport ;
- soit plus pratique et rapide à monter que les tablettes classiques de l'art antérieur ;
- conserve, voire améliore, les qualités de fiabilité, d'esthétisme et de résistance obtenues avec les tablettes arrières antérieures ;
- supprime, ou à tout le moins diminue les temps de réglage pour le constructeur de véhicules automobiles ;
- puisse être aisément adaptée à différents véhicules.

Un autre objectif important de l'invention est de conserver et d'optimiser ces différents aspects en présence d'un store d'occultation porté par la tablette.

Ces objectifs ainsi que d'autres qui apparaîtront par la suite, sont atteints grâce à l'invention qui a pour objet une tablette arrière destinée à équiper un véhicule automobile comme caractérisée dans la revendication 1.

De cette façon, l'invention propose une approche nouvelle consistant à fabriquer et à ne livrer qu'une seule pièce comprenant à la fois la tablette et un ou plusieurs éléments d'habillage intérieur du véhicule.

Bien entendu, cette pièce unique correspond à une seule gamme de montage, ce qui entraîne une réduction du temps de montage comparativement aux montages successifs de pièces remplissant les mêmes fonctions mais présentées séparées les unes des autres.

On précise que le terme « essentiellement vertical » doit s'interpréter de façon relativement large, les véhicules présentant des formes diverses et variées ne comprenant que rarement des surfaces véritablement verticales. Les éléments de carrosserie concernés sont donc les parties de carrosserie qui s'étendent à partir de la base de la tablette arrière, ou au voisinage de celle-ci, en direction du pavillon.

Par ailleurs, on entend par « bords latéraux » de la tablette les bords qui jouxtent les extrémités de la fente de la tablette, cette fente s'étendant transversalement à l'axe longitudinal du véhicule.

Préférentiellement, la tablette arrière est munie de deux prolongements similaires, respectivement sur chacun de ses bords latéraux.

Les prolongements de la tablette ont ainsi une double fonction : celle d'habiller l'intérieur du véhicule et celle d'assurer la fixation de la tablette arrière.

On note que dans la pratique, les prolongements seront le plus souvent symétriques par rapport à la tablette arrière.

Selon une solution préférée, au moins un desdits prolongements est mobile par rapport à ladite tablette. Dans ce cas, ledit ou lesdits prolongements sont mobiles à pivotement entre au moins deux positions.

Ainsi, des gains notables peuvent être obtenus sur les coûts de livraison. En effet, les tablettes et ces prolongements peuvent être emballés dans une configuration à plat peu encombrante.

Le déballage et la préparation du montage s'opèrent rapidement et simplement ; il suffit de déployer les prolongements pour obtenir la configuration selon laquelle la tablette peut être montée à l'intérieur du véhicule.

Ladite tablette présente une fente permettant le passage de la toile d'un store d'occultation.

Au moins un desdits prolongements portent des moyens de guidage pour le déploiement et/ou le repliement de ladite toile du store. Dans ce cas, lesdits moyens de guidage comprennent au moins un rail dans lequel peut circuler l'extrémité d'une barre de tirage, ou un élément solidaire d'une barre de tirage.

Une telle caractéristique s'inscrit dans le concept général de l'invention, selon lequel un même élément regroupe les différentes pièces mises en oeuvre traditionnellement de façon séparée, ce qui permet une simplification sensible des aspects logistiques et des étapes de montage.

Ledit ou lesdits rails s'étendent sensiblement dans l'alignement de ladite fente.

Préférentiellement, la tablette arrière est formée de deux demi-tablettes entre lesquelles s'étend ladite fente. Dans ce cas, lesdites demi-tablettes sont reliées entre elles par ledit ou lesdits prolongements.

On peut de cette façon fabriquer deux tablettes dont les bords destinés à former les rebords de la fente finale sont conformés pour présenter une rigidité suffisante qui ne se détériore pas dans le temps (contrairement à une fente découpée dans une tablette comme c'est le cas de l'art antérieur).

Selon une solution avantageuse, la tablette porte un store d'occultation.

Le constructeur automobile reçoit ainsi une tablette pré-équipée de l'ensemble des moyens nécessaires à la mise en oeuvre d'un store, les réglages du store ayant été effectués préalablement à sa livraison.

L'invention concerne également un procédé de montage d'une tablette arrière telle que décrite précédemment, caractérisée en ce qu'il comprend les étapes de :
- obtention d'une tablette dans une position de livraison dans laquelle le ou lesdits prolongements sont sensiblement parallèles à ladite tablette ;
- mise en place de ladite tablette dans l'emplacement dudit véhicule prévu à cet effet, ledit ou lesdits prolongements étant dans ladite position de livraison ;
- dépliage dudit ou desdits prolongements ;
- fixation dudit ou desdits prolongements sur ledit ou lesdits éléments de carrosserie.

Un tel montage apparaît clairement d'une grande simplicité et peut être effectué rapidement, ceci éventuellement par une personne non spécialisée.

L'invention concerne aussi un véhicule équipé d'une tablette arrière telle que défini dans la revendication 1.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue fragmentée d'une tablette arrière selon l'invention ;
- la figure 2 est une vue d'une tablette en position pliée ;

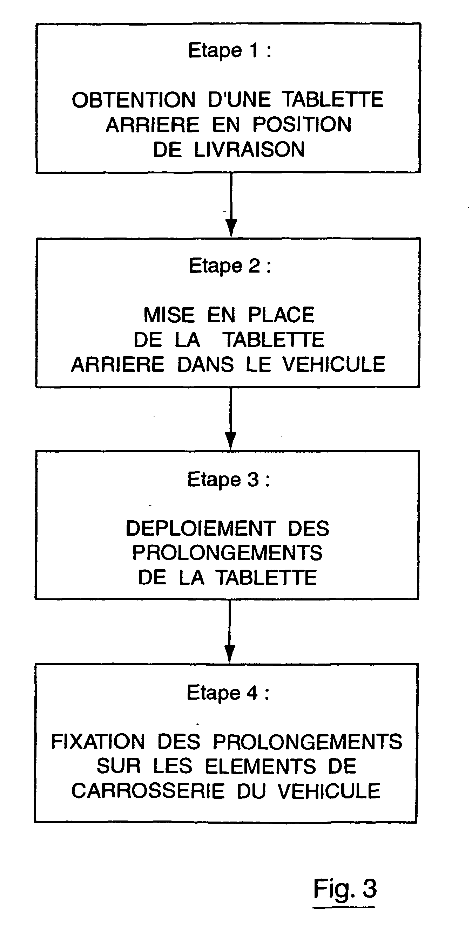

- la figure 3 illustre sous forme synoptique un procédé de montage d'une tablette arrière selon l'invention.

Tel qu'indiqué précédemment, le principe général de l'invention réside dans le fait d'intégrer dans un ensemble prêt à monter la tablette arrière d'un véhicule et les panneaux perpendiculaires (ou plus exactement sensiblement parallèles à la paroi correspondante du véhicule). L'invention s'applique au cas où la tablette porte un store. C'est ce dernier cas qui est décrit en détail par la suite. L'ensemble prêt à monter peut alors comprendre les éléments structurels liés à la mise en oeuvre d'un store d'occultation dont la toile passe au travers d'une fente ménagée dans la tablette.

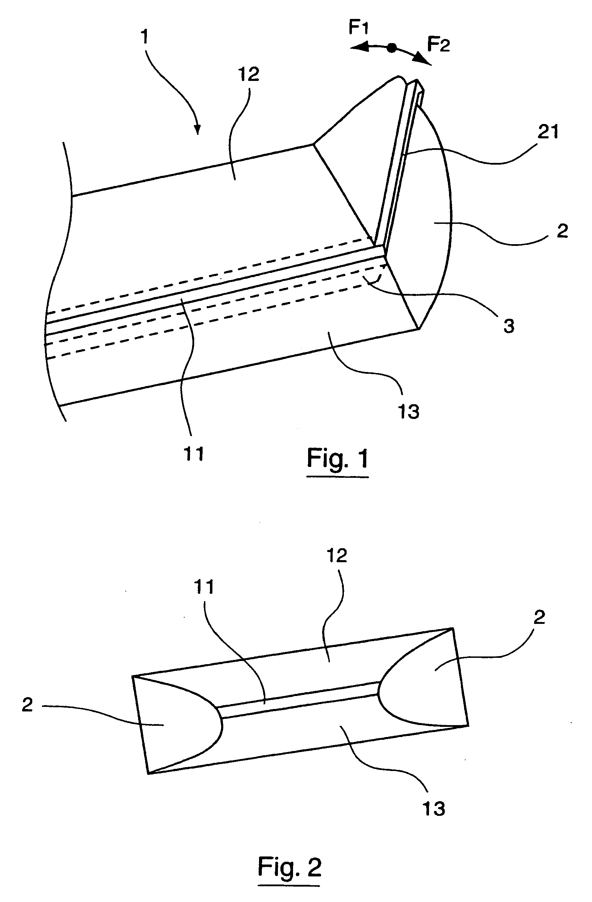

En référence à la figure 1, une tablette arrière 1 selon l'invention présente une fente 11 permettant le passage d'une toile de store, les bords latéraux de la tablette présentant un prolongement 2 destiné à habiller un élément de carrosserie s'étendant à partir du plan de la tablette et en direction du pavillon du véhicule.

Selon le présent mode de réalisation, la tablette 1 est constituée de deux demi-tablettes 12, 13 reliées entre elles par les prolongements 2, ces derniers étant couplés aux demi-tablettes de façon à pouvoir pivoter autour de leurs bords communs.

Cette liaison pivot permet de :
- rabattre les prolongements 2 contre les demi-tablettes 12, 13, tel qu'indiqué par la flèche F1, de façon à placer l'ensemble dans une configuration à plat (illustrée par la figure 2), particulièrement avantageuse lors de la livraison de l'ensemble ;
- déployer selon la flèche F2 le prolongement 2 de façon qu'il corresponde à l'élément de carrosserie qu'il est destiné à habiller.

Tel qu'illustré par la figure 1, un rail 21 est rapporté sur chacun des prolongements 2, ces rails formant moyen de guidage de la barre de tirage, ou d'éléments solidaires de cette dernière, tels que des patins de coulissement. La barre de tirage entraîne une extrémité de la toile du store d'occultation logée par exemple dans un boîtier 3 (représenté en traits pointillés) fixe sous la tablette.

La toile peut être entraînée de façon nouvelle, ou être actionnée par des moyens de motorisation, selon diverses techniques connues.

Si un entraînement par câbles est prévu, ces derniers peuvent être solidarisés aux prolongements 2.

Dans le cas où les prolongements 2 ne sont pas réellement perpendiculaires, mais formant un angle inférieur à 90°, la toile peut être trapézoïdale, et la barre de tirage conçue pour que sa longueur varie.

On notera que la technique de l'invention permet de solidariser les deux demi-tablettes par les prolongements. Ainsi, la fente peut s'étendre sur toute la longueur de la tablette sans problème de solidité ni de rigidité, ce qui n'est bien sûr pas le cas des techniques connues.

Si un entraînement par câbles est prévu, ces derniers peuvent être solidarisés aux prolongements 2.

Le montage d'une tablette arrière de véhicule selon l'invention s'opère donc simplement et rapidement par :
- étape 1 : réception en position pliée (permettant un stockage plus facile) : les prolongements 2 sont sensiblement parallèles aux demi-tablettes 12, 13 ;
- étape 2 : mise en place de la tablette arrière dans son emplacement dans le véhicule, la tablette étant toujours en position pliée ;
- étape 3 : le dépliage (flèche F2 sur la figure 1) des prolongements 2 en vue de les amener dans une position parallèle aux éléments de carrosserie correspondants ;
- étape 4 : la fixation des prolongements 2 sur les éléments de carrosserie correspondants.

Le store ayant été pré-réglé en atelier, avant son expédition et monté sur l'ensemble qui vient d'être décrit, est prêt à l'emploi immédiatement après montage de l'ensemble à l'intérieur du véhicule.

## Revendications

1. Tablette arrière (1) destinée à équiper un véhicule automobile, présentant au moins un prolongement (2) destiné à former au moins partiellement l'habillage d'un élément de carrosserie s'étendant essentiellement verticalement au voisinage de l'emplacement de ladite tablette dans ledit véhicule,
**caractérisée en ce que** ledit ou lesdits prolongements (2) sont mobiles à pivotement entre au moins deux positions :
- une position de livraison dans laquelle ledit ou lesdits prolongements (2) sont rabattus à plat contre ladite tablette ;
- une position de montage dans laquelle ledit ou lesdits prolongements (2) sont ramenés sensiblement parallèles audit élément de carrosserie,
et **en ce que** ladite tablette présente une fente (11) permettant le passage de la toile d'un store d'occultation et au moins un desdits prolongements (2) comprennent au moins un rail de guidage (21), dans lequel peut circuler l'extrémité d'une barre de tirage ou un élément solidaire d'une barre de tirage pour le déploiement et/ou le repliement de ladite toile du store,
ledit ou lesdits rails s'étendant sensiblement dans l'alignement de ladite fente (11).

2. Tablette arrière (1) selon la revendication 1, **caractérisée en ce qu'**elle est munie de deux prolongements (2) similaires, respectivement sur chacun de ses bords latéraux.

3. Tablette arrière (1) selon l'une des revendications 1 et 2, **caractérisée en ce qu'**au moins un desdits prolongements est mobile par rapport à ladite tablette.

4. Tablette arrière (1) selon l'une quelconque des revendications 1 à 3, **caractérisée en ce qu'**elle est formée de deux demi-tablettes (12), (13) entre lesquelles s'étend ladite fente (11).

5. Tablette arrière (1) selon la revendication 4, **caractérisée en ce que** lesdites demi-tablettes (12), (13) sont reliées entre elles par ledit ou lesdits prolongements (2).

6. Tablette selon l'une quelconque des revendications 1 à 5, **caractérisée en ce qu'**elle porte un store d'occultation (3).

7. Procédé de montage d'une tablette arrière selon l'une quelconque des revendications 1 à 6, **caractérisé en ce qu'**il comprend les étapes de :
- obtention d'une tablette (1) dans une position de livraison dans laquelle le ou lesdits prolongements sont sensiblement parallèles à ladite tablette ;
- mise en place de ladite tablette (1) dans l'emplacement dudit véhicule prévu à cet effet, ledit ou lesdits prolongements (2) étant dans ladite position de livraison ;
- dépliage dudit ou desdits prolongements (2) ;
- fixation dudit ou desdits prolongements (2) sur ledit ou lesdits éléments de carrosserie.

8. Véhicule équipé d'une tablette arrière (1), **caractérisée en ce que** ladite tablette arrière présente au moins un prolongement (2) destiné à former au moins partiellement l'habillage d'un élément de carrosserie s'étendant essentiellement verticalement au voisinage de l'emplacement de ladite tablette dans ledit véhicule en ce que ledit ou lesdits prolongements (2) sont mobiles à pivotement entre au moins deux positions :
- une position de livraison dans laquelle ledit au lesdits prolongements. (2) sont rabattus à plat contre ladite tablette ;
- une position de montage dans laquelle ledit ou lesdits prolongements (2) sont ramenés sensiblement parallèles audit éléments de carrosserie,
et **en ce que** ladite tablette présente une fente (11) permettant le passage de la toile d'un store d'occultation et au moins un desdits prolongements (2) comprennent au moins un rail de guidage (21), dans lequel peut circuler l'extrémité d'une barre de tirage ou un élément solidaire d'une barre de tirage pour le déploiement et/ou le repliement de ladite toile du store,
ledit ou lesdits rails s'étendant sensiblement dans l'alignement de ladite fente (11).

## Claims

1. Rear parcel shelf (1) which is designed to equip a motor vehicle, having at least one extension (2) which is designed to form at least partially the covering of a body element which extends substantially vertically in the vicinity of the location of the said parcel shelf in the said vehicle, **characterised in that** the said extension(s) (2) is/are mobile in a pivoting manner between at least two positions:
- a delivery position, in which the said extension(s) (2) is/are folded back against the said parcel shelf;
- a fitting position in which the said extension(s) (2) is/are brought substantially parallel to the said body element,
and **in that** the said parcel shelf has a slot (11) which permits passage of the fabric of a screening blind, and at least one of the said extensions (2) comprises at least one guide rail (21) in which there can circulate the end of a pull rod or an element which is integral with a pull rod, for unfurling or returning of the said fabric of the blind, the said rail(s) extending substantially in the alignment of the said slot (11).

2. Rear parcel shelf (1) according to claim 1, **characterised in that** it is provided with two similar extensions (2), respectively on each of its lateral edges.

3. Rear parcel shelf (1) according to one of claims 1 and 2, **characterised in that** at least one of the said extensions is mobile relative to the said parcel shelf.

4. Rear parcel shelf (1) according to any one of claims 1 to 3, **characterised in that** it is formed by two half-parcel shelves (12), (13) between which the said slot (11) extends.

5. Rear parcel shelf (1) according to claim 4, **characterised in that** the said half-parcel shelves (12), 13) are connected to one another by the said extension(s) (2).

6. Rear parcel shelf (1) according to any one of claims 1 to 5, **characterised in that** it supports a screening blind (3).

7. Method for fitting a rear parcel shelf according to any one of claims 1 to 5, **characterised in that** it comprises the steps of:
- obtaining a rear parcel shelf (1) in a delivery position in which the said extension(s) is/are substantially parallel to the said parcel shelf:
- putting the said parcel shelf (1) into place in the location of the said vehicle which is provided for this purpose, the said extension(s) (2) being in the said delivery position;
- unfolding the said extension(s)(2); and
- securing the said extension(s) onto the said body element(s).

8. Vehicle equipped with a rear parcel shelf (1), **characterised in that** the said rear parcel shelf has at least one extension (2) which is designed to form at least partially the covering of a body element which extends substantially vertically in the vicinity of the location of the said parcel shelf in the said vehicle, wherein the said extension(s) (2) is/are mobile in a pivoting manner between at least two positions:
- a delivery position, in which the said extension(s) (2) is/are folded back against the said parcel shelf;
- a fitting position in which the said extension(s) (2) is/are brought substantially parallel to the said body element,
and **in that** the said parcel shelf has a slot (11) which permits passage of the fabric of a screening blind, and at least one of the said extensions (2) comprises at least one guide rail (21) in which there can circulate the end of a pull rod or an element which is integral with a pull rod, for unfurling or returning of the said fabric of the blind, the said rail(s) extending substantially in the alignment of the said slot (11).

## Patentansprüche

1. Hintere Ablage (1) für ein Kraftfahrzeug, die mindestens eine Verlängerung (2) aufweist, welche zumindest teilweise die Verkleidung eines Karosserieelementes bilden soll, das sich im Wesentlichen senkrecht in der Umgebung dieser hinteren Ablage in dem Kraftfahrzeug erstreckt,
**dadurch gekennzeichnet, das** die erwähnte Verlängerung (2) bzw. die erwähnten Verlängerungen (2) beweglich ist bzw. sind, wobei sie zwischen zwei Positionen schwenkbar ist (sind):
- eine Lieferposition, bei der die Verlängerung(en) (2) flach gegen die erwähnte hintere zurückgeklappt ist (sind);
- eine Montageposition, bei der die Verlängerung(en) (2) in etwa parallel zum Karosserieelement gestellt wird (werden) und,
dadurch, dass die Ablage einen Schlitz (11) aufweist, der den Durchgang der Stoffbahn eines Verdeckungsrollos ermöglicht, und dass mindestens eine der Verlängerungen (2) mindestens eine Führungsschiene (21) aufweist, in der das Ende einer Zugstange oder ein mit einer Zugstange verbundenes Element laufen kann, um das Entfalten und/oder das Zurückfalten der Stoffbahn des Rollos zu erimöglichen,
wobei die Schiene(n) sich in etwa in der Verlängerung des Schlitzes (11) erstreckt (erstrecken).

2. Hintere Ablage (1) nach Anspruch 1,
**dadurch gekennzeichnet, dass** sie zwei ähnliche Verlängerungen (2) jeweils auf jedem der Seitenränder aufweist.

3. Hintere Ablage (1) nach einem der Ansprüche 1 oder 2,
**dadurch gekennzeichnet, dass** mindestens eine der Verlängerungen gegenüber der Ablage beweglich ist.

4. Hintere Ablage (1) nach einem der Ansprüche 1 bis 3,
**dadurch gekennzeichnet, dass** sie von zwei halben Ablagen (12), (13) gebildet wird, zwischen denen sich der Schlitz (11) erstreckt.

5. Hintere Ablage (1) nach Anspruch 4,
**dadurch gekennzeichnet, dass** die halben Ablagen (12), (13) untereinander durch die Verlängerungen (2) verbunden sind.

6. Ablage nach einem der Ansprüche 1 bis 5,
**dadurch gekennzeichnet, dass** sie ein Verdeckungsrollo (3) trägt.

7. Montageverfahren einer hinteren Ablage nach einem der Ansprüche 1 bis 6,
**dadurch gekennzeichnet, dass** es die folgenden Schritte aufweist:
- Erzielen einer Ablage (1) in einer Lieferposition, bei der die Verlängerung(en) in etwa parallel zur Ablage ist (sind);
- Einsetzen der Ablage (1) an der zu diesem Zweck vorgesehenen Stelle im Fahrzeug, wobei die Verlängerung(en) (2) sich in der Lieferposition befindet (befinden);
- Entfalten der Verlängerung(en) (2);
- Befestigung der Verlängerung(en) (2) an dem Karosserieelement bzw. an den Karosserieelementen.

8. Fahrzeug, das mit einer hinteren Ablage (1) versehen ist, welche **dadurch gekennzeichnet ist, dass** diese hintere Ablage mindestens eine Verlängerung (2) aufweist, welche zumindest teilweise die Verkleidung eines Karosserieelementes bilden soll, das sich im Wesentlichen senkrecht in der Umgebung des Ortes der Ablage in dem Fahrzeug erstreckt, und dass die Verlängerung(en) (2) beweglich sind, wobei sie zwischen mindestens zwei Positionen schwenkbar ist (sind):
- eine Lieferposition in der die Verlängerung(en) (2) flach gegen die Ablage zurückgeklappt ist (sind);
- eine Montageposition, bei der die Verlängerung(en) (2) in etwa parallel zum Karosserieelement gestellt wird (werden) und,
dadurch, dass die Ablage einen Schlitz (11) aufweist, der den Durchgang der Stoffbahn eines Verdeckungsrollos ermöglicht, und dass mindestens eine der Verlängerungen (2) mindestens eine Führungsschiene (21) aufweist, in der das Ende einer Zugstange oder ein mit einer Zugstange verbundenes Element laufen kann, um das Entfalten und/oder das Zurückfalten der Stoffbahn des Rollos zu ermöglichen,
wobei die Schiene(n) sich in etwa in der Verlängerung des Schlitzes (11) erstreckt (erstrecken).
